# DEMANDE DE BREVET EUROPEEN

(11) **EP 2 487 099 A1**
(43) Date de publication de la demande: **15.08.2012**
(21) Numéro de dépôt: 12000827.1
(22) Date de dépôt: 08.02.2012
(51) Int. Cl.: B62M 6/50, G01L 3/14

(54) **Moyeu de mesure de couple, système de mesure de puissance et roue de cycle équipée d'un tel moyeu ou d'un tel système**

(30) Priorité: 10.02.2011 FR 1100410
(71) Demandeur: MAVIC S.A.S., 74370 Metz-Tessy (FR)
(72) Inventeur: Mercat, Jean-Pierre, 74650 Chavanod (FR); Neyroud, Christophe, 74960 Cran Gevrier (FR)
(74) Mandataire: Rambaud, Pascal

(57) **Abrégé**

Ce moyeu (2) de mesure de la puissance d'entrainement d'une roue de cycle, comprend un arbre central (10) définissant un axe de rotation (X10) de la roue, un corps de moyeu (20) monté libre en rotation autour de l'arbre (10), un flasque (60) monté libre en rotation autour du corps de moyeu (20) et aligné axialement avec le corps de moyeu (20), ainsi qu'un capteur de couple (30) comprenant un corps d'épreuve (301) qui supporte au moins une jauge de déformation. Le capteur de couple (30) est logé dans un logement bi-partite qui comprend une découpe (48.1), ménagée dans une surface radiale externe (203) du corps de moyeu (20), et une échancrure (48.2), ménagée dans une surface radiale externe (62) du flasque (60).

## Description

La présente invention concerne un moyeu pour la mesure du couple d'une roue de cycle, ainsi qu'une roue de cycle équipée d'un tel moyeu de mesure de couple. La présente invention concerne également un moyeu pour la mesure de la puissance d'une roue de cycle, ainsi qu'une roue de cycle équipée d'un tel moyeu.

La mesure de la puissance motrice d'une roue de cycle présente un intérêt dans de nombreux cas, par exemple pour évaluer la performance d'un cycliste au cours d'un entraînement. La puissance développée par le cycliste peut être obtenue en multipliant la vitesse du cycle par la force motrice, transmise par le cycliste à la roue motrice. Cependant, la mesure de cette force est relativement complexe, et dans le cadre de la présente invention, la puissance est obtenue en multipliant le couple moteur, transmis par le cycliste à la roue motrice, par la vitesse angulaire de cette roue.

US-B-6 418 797 divulgue un moyeu bi-partite pour la mesure de la puissance d'une roue de cycle. Une partie menante du moyeu, mobile en rotation autour d'un axe fixe de la roue, est entrainée en rotation par le cycliste qui pédale, par l'intermédiaire d'un dispositif de roue-libre. Une partie menée du moyeu, à l'intérieur de laquelle est logée la partie menante, est séparée radialement de la partie menante par des roulements à bille. Un élément de liaison, qui supporte des jauges de déformation, est fixé à la fois à la partie menante et à la partie menée du moyeu. Ainsi, en service, l'élément de liaison transmet à la partie menée le couple moteur fourni par le cycliste, et l'élément de liaison se déforme. La déformation de l'élément de liaison est mesurée par la jauge de déformation et permet d'obtenir une mesure du couple moteur fourni par le cycliste. Par ailleurs, un capteur mesure la vitesse angulaire de la roue motrice, ce qui permet d'obtenir une mesure de la puissance développée par le cycliste, en multipliant le couple moteur par la vitesse angulaire. Un tel dispositif est lourd et encombrant, car il nécessite la présence d'un élément de liaison relativement massif, pour supporter les jauges de déformation. D'autre part, les différentes jauges sont collées à des endroits différents de l'élément de liaison et elles doivent être reliées les unes aux autres par des fils également collés sur l'élément de liaison. La fixation de composants distincts sur l'élément de liaison pose des problèmes de qualité de fabrication et de fiabilité électronique.

C'est à ces inconvénients qu'entend plus particulièrement remédier l'invention en proposant un moyeu léger et compact pour la mesure de la puissance d'une roue de cycle. L'invention vise également à proposer un moyeu de grande qualité et avec une fiabilité améliorée pour un coût modéré.

A cet effet, l'invention a pour objet un moyeu de mesure du couple d'entrainement d'une roue de cycle, qui comprend :
- un arbre central définissant un axe de rotation de la roue,
- un corps de moyeu monté libre en rotation autour de l'arbre,
- un flasque monté libre en rotation autour du corps de moyeu et aligné axialement avec le corps de moyeu,
- au moins un capteur de couple comprenant un corps d'épreuve qui supporte au moins une jauge de déformation,
dans lequel, le capteur de couple est logé dans un logement bi-partite qui comprend une découpe, ménagée dans une surface radiale externe du corps de moyeu, et une échancrure, ménagée dans une surface radiale externe du flasque.

Selon des aspects avantageux mais non obligatoires de l'invention, un tel moyeu de mesure de puissance peut incorporer une ou plusieurs des caractéristiques suivantes, prises dans toute combinaison techniquement admissible :
- Un axe longitudinal du capteur forme, avec une direction orthoradiale à l'axe de rotation du moyeu, qui passe par le centre du capteur, un angle inférieur à 45°, de préférence inférieur à 20°.
- Un axe longitudinal du capteur forme avec une direction orthoradiale à l'axe de rotation du moyeu un angle sensiblement nul, de préférence égal à 0°.
- Lorsque le cycliste pédale, le capteur est comprimé entre une surface d'appui de la découpe du corps de moyeu et une surface d'appui de l'échancrure du flasque, en regard avec la surface d'appui du corps de moyeu.
- Les surfaces d'appui sont concaves et le corps d'épreuve comprend deux faces d'appui opposées convexes, en contact contre les surfaces d'appui.
- Les jauges de déformation sont rapportées sur une même face supérieure du corps d'épreuve.
- Le corps d'épreuve supporte quatre jauges de déformation montées en pont de Wheatstone et une épaisseur du corps d'épreuve, mesurée perpendiculairement à la face supérieure, varie entre une épaisseur minimale et une épaisseur maximale. Deux des jauges de déformation sont localisées au niveau d'une zone du corps d'épreuve dont l'épaisseur est plus faible que l'épaisseur de zones du corps d'épreuve au niveau desquelles sont localisées les deux autres jauges de déformation.
- Le corps d'épreuve comprend deux échancrures situées de part et d'autre d'un plan médian longitudinal du corps d'épreuve. La forme de chaque échancrure est définie par un demi-cylindre dont la base complète est un contour de forme oblongue.
- Chaque échancrure comprend d'une part, une partie inférieure, qui débouche sur une face opposée à la face supérieure et, d'autre part, une partie supérieure, située du côté de la face supérieure. Les dimensions de la partie supérieure sont plus grandes que les dimensions de la partie inférieure.
- Le corps d'épreuve comprend une nervure centrée sur un plan médian longitudinal du corps d'épreuve.

Deux capteurs du couple, chacun étant logé dans des logements bi-partite, sont intercalés entre le corps de moyeu et le flasque. De préférence les capteurs sont logés dans des logements diamétralement placés l'un par rapport à l'autre.

L'invention concerne également un système de mesure de la puissance d'entrainement d'une roue de cycle, comprenant un tel moyeu de mesure de couple, équipé d'un organe de mesure de la vitesse angulaire du moyeu par rapport à l'arbre central.

Avantageusement, le moyeu de mesure de puissance comprend un dispositif électronique relié au capteur de couple et à l'organe de mesure, pour le calcul de la puissance de la roue à partir des informations transmises par le capteur de couple et l'organe de mesure.

Enfin, l'invention concerne une roue de cycle qui comprend un tel moyeu de mesure de couple ou un tel système de mesure de puissance.

L'invention sera mieux comprise à la description qui va suivre d'un moyeu de mesure de puissance conforme à l'invention, donnée uniquement à titre d'exemple et faite en référence aux dessins annexés dans lesquels :
- la figure 1 est une vue en perspective éclatée d'un moyeu conforme à l'invention ;
- la figure 2 est une coupe axiale du moyeu de la figure 1 ;
- la figure 3 est une coupe selon la ligne III-III à la figure 2 ;
- la figure 4 est une vue en perspective d'un capteur appartenant au moyeu de la figure 1 ;
- la figure 5 est une vue en perspective, selon un autre angle, du capteur de la figure 4 ;
- la figure 6 est une vue de dessous du capteur de la figure 4 ;
- la figure 7 est une vue latérale du capteur de la figure 4 ;
- la figure 8 est une coupe selon la ligne VIII-VIII à la figure 7 ; et
- la figure 9 est une vue en perspective d'une roue de cycle équipée du moyeu de la figure 1,
- la figure 10 est une vue en coupe d'un mode de réalisation alternatif de l'invention,
- la figure 11 est une vue en perspective d'une variante de capteur.

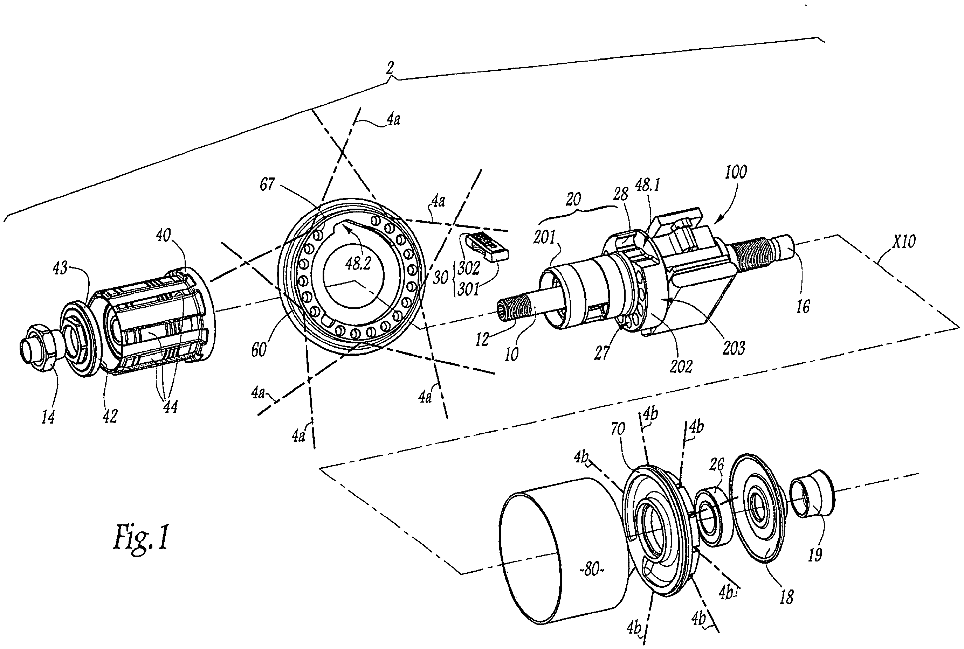

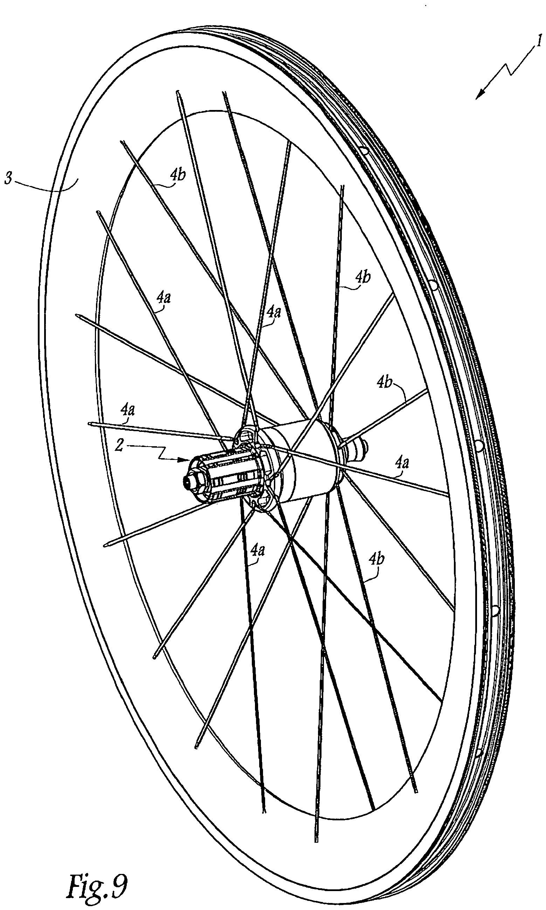

Le moyeu de mesure de couple 2 représenté aux figures 1 à 3 fait partie d'une roue arrière 1 de bicyclette représentée sans son pneumatique à la figure 9. La roue 1 comprend deux nappes de rayons 4a et 4b montées sur une jante 3. Les nappes de rayons 4a et 4b sont représentées par leurs traits d'axe à la figure 1.

Le moyeu 2 comprend un arbre creux 10 dont on note X10 un axe longitudinal. Cet arbre 10 porte, au niveau d'une première extrémité filetée 12, un écrou 14. Au niveau de son extrémité 16 opposée à l'extrémité 12, l'arbre 10 porte un embout d'extrémité 19. L'écrou 14 et l'embout 19 permettent le montage du moyeu 2 et de la roue à laquelle il appartient sur le cadre non représenté d'une bicyclette.

Dans ce qui suit, les termes « axial » et « radial » et leurs dérivés sont définis en référence à l'axe X10. Une direction axiale est parallèle à l'axe X10, alors qu'une direction radiale est perpendiculaire et sécante à cet axe. Une surface radiale est perpendiculaire à une direction radiale, et une surface axiale est perpendiculaire à une direction axiale.

Un corps de moyeu 20 est monté autour de l'arbre 10, avec possibilité de rotation, par rapport à l'arbre 10, autour de l'axe X10. Le corps de moyeu 20 est percé de trous borgnes 27 afin de diminuer sa masse. Un palier à billes 24 est intercalé radialement entre l'arbre 10 et le corps 20. Ce palier est disposé au niveau d'une extrémité axiale 201 du corps de moyeu 20, tournée du côté de l'écrou 14. Un anneau 21 est disposé autour du corps de moyeu 20 et dépasse de l'extrémité axiale 201, du côté de l'écrou 14. L'anneau 21 forme un logement de réception d'un roulement à billes 22 intercalé radialement entre l'arbre 10 et l'anneau 21. Une rondelle 23 sépare axialement le roulement 22 et le roulement 24. Un corps de roue-libre 40 solidaire de l'anneau 21 est monté autour du corps de moyeu 20 et de l'anneau 21. Un palier lisse 25 est intercalé radialement entre le corps de moyeu 20 et le corps de roue-libre 40. Une bague d'arrêt 42, prévue pour obturer le corps de roue-libre 40, du côté de l'écrou 14, porte un filetage externe 43 qui coopère avec un taraudage ménagé à l'intérieur du corps de roue-libre 40. L'écrou 14 et la bague d'arrêt 42 retiennent axialement les paliers 22 et 24 et la bague 21.

Le corps de roue-libre 40 est pourvu d'une denture interne 41 et le corps de moyeu 20 est pourvu de deux cliquets, non représentés, destinés à interagir avec la denture interne 41 du corps de roue-libre 40, pour solidariser sélectivement les corps 20 et 40 lorsque le moyeu 2 est en configuration dite de pédalage où le corps de roue-libre 40 est menant par rapport au corps de moyeu 20 car le cycliste exerce un effort d'entraînement en rotation du corps de roue-libre 40, au moyen d'une chaîne non représentée. Les cliquets permettent une rotation unidirectionnelle du corps de moyeu 20 par rapport au corps de roue libre 40 et ne s'opposent pas à la rotation de la roue lorsque le cyclise arrête de pédaler.

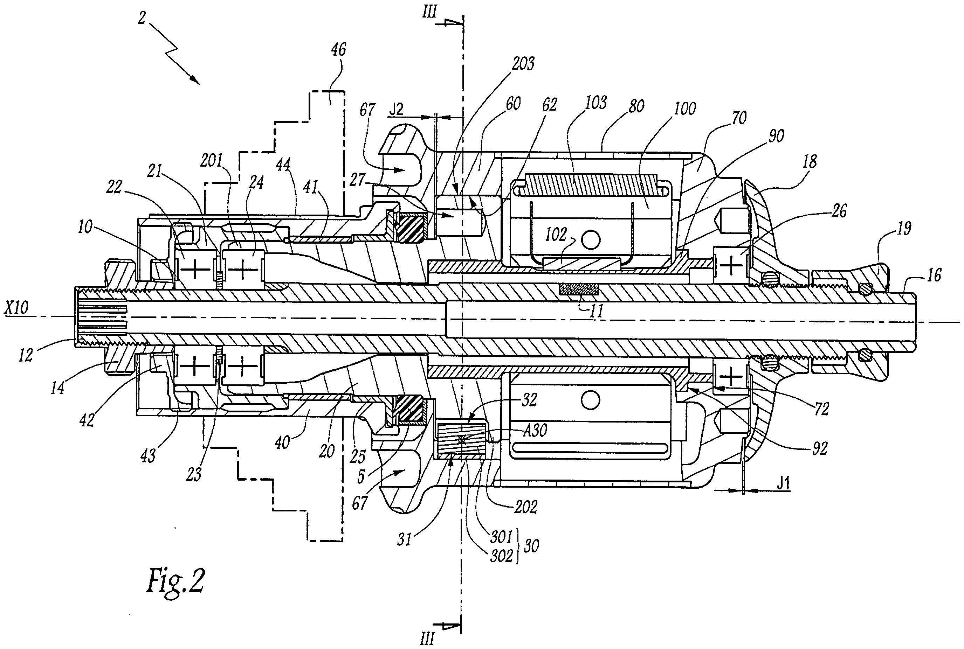

Le corps de roue-libre 40 est pourvu de nervures externes 44 qui forment des reliefs de solidarisation en rotation du corps de roue-libre 40 avec une cassette de pignons 46 représentée à la figure 2, en traits mixtes, par la trace de son enveloppe. Cette cassette de pignons 46 est en prise avec la chaîne non représentée de la bicyclette.

Un flasque 60 est monté libre en rotation autour d'une extrémité axiale 202 du corps de moyeu 20, opposée à l'extrémité axiale 201. Le flasque 60 est aligné axialement avec l'extrémité axiale 202 du corps de moyeu 20. La nappe de rayons 4a est assemblée au flasque 60 et relie la jante 3 au flasque 60. Une surface radiale interne 62 du flasque 60 est en contact, au jeu fonctionnel près, avec une surface radiale externe 203 de l'extrémité axiale 201 du corps de moyeu 20. Le flasque 60 est percé de trous borgnes 67 afin de diminuer sa masse. Afin de limiter les frottements, le flasque 60 est centré sur le corps de moyeu 20.

Un joint à lèvres 5 est intercalé axialement entre le corps de roue-libre 40 et le flasque 60 pour empêcher les saletés extérieures de pénétrer dans le moyeu 2.

Un capteur 30 globalement parallélépipédique, d'axe longitudinal A30, est intercalé, selon une direction radiale R, entre le corps de moyeu 20 et le flasque 60. Le capteur 30 comprend un corps d'épreuve 301, fabriqué à partir d'un alliage métallique, qui délimite une face inférieure 32, tournée vers l'axe X10, et une face supérieure 31, opposée à la face inférieure 32 et supportant un circuit imprimé 302.

Dans la suite et pour ce qui concerne le capteur 30, les termes tels que « longueur », « long » ou « longitudinal » sont relatifs à la direction de l'axe A30, et les termes tels que « largeur », « large » ou « transversal » font référence à une direction perpendiculaire à l'axe A30 et parallèle à la face supérieure 31 du corps d'épreuve 301.

On note 303 et 304 les extrémités axiales du capteur 30, qui délimitent chacune respectivement une surface d'extrémité 33 et 35.

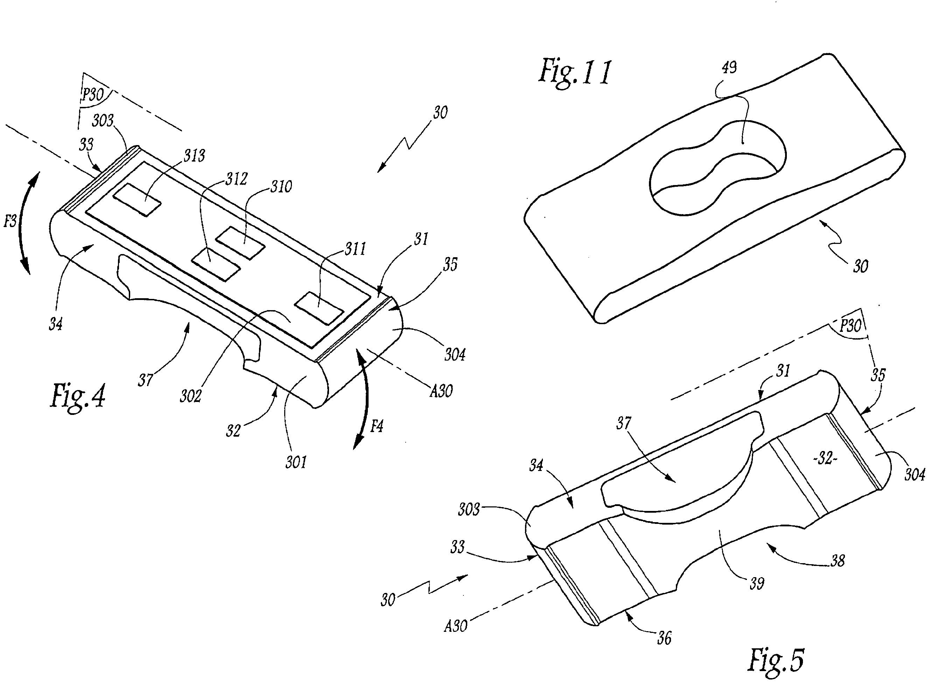

Le circuit imprimé 302 supporte quatre jauges de déformation 310, 311, 312 et 313, visibles plus en détail à la figure 4 et orientées de manière à mesurer une déformation longitudinale du corps d'épreuve 301. Les jauges 310 à 313 sont dans un même plan, ce qui facilite la fabrication du capteur 30. De manière avantageuse mais non obligatoire, on choisira des jauges qui possèdent un coefficient ou facteur de jauge élevé, pour obtenir un signal de plus grande amplitude et améliorer ainsi la sensibilité du capteur 30.

De manière connue en soi, la variation relative de la résistance de chaque jauge de déformation 310 à 313 est proportionnelle, au facteur de jauge près, à la variation de longueur relative de la jauge 310 à 313 considérée, et donc également à la variation de longueur relative de la partie du corps d'épreuve 301 qui supporte la jauge de déformation 310 à 313 considérée.

Les jauges de déformation 310 à 313 sont montées, de manière connue en soi, en pont de Wheatstone complet. Les jauges 310 à 313 sont rapportées sur le même corps d'épreuve 301, ce qui rend le signal délivré par les jauges 310 à 313 insensible aux variations de température, car le pont de Wheatstone est ainsi auto-compensé.

Le capteur 30 est reçu dans un logement 48 bi-partite, dont une première partie est constituée par une découpe 48.1 ménagée dans la surface radiale externe 203 du corps de moyeu 20, et dont une seconde partie est constituée par une échancrure 48.2 réalisée dans la surface radiale interne 62 du flasque 60.

A la figure 1, le flasque 60 est rabattu perpendiculairement aux corps 20 et 40, pour montrer l'échancrure 48.2. Ainsi, l'axe X10 qui est rectiligne dans la réalité forme une ligne brisée sur cette figure qui, au niveau du flasque 60, définit un angle droit avec l'axe longitudinal du corps de moyeu 20 et du corps de roue-libre 40.

Lorsque le capteur 30 est en place dans le logement 48, la surface d'extrémité 33 du capteur 30 est en appui contre une surface d'appui 28 de la découpe 48.1, et l'autre surface d'extrémité 35 du capteur 30 est en appui contre une surface d'appui 68 de l'échancrure 48.2, qui est en regard avec la surface d'appui 28. On définit un centre C30 du capteur 30, situé à mi-distance entre les surfaces d'extrémité 33 et 35.

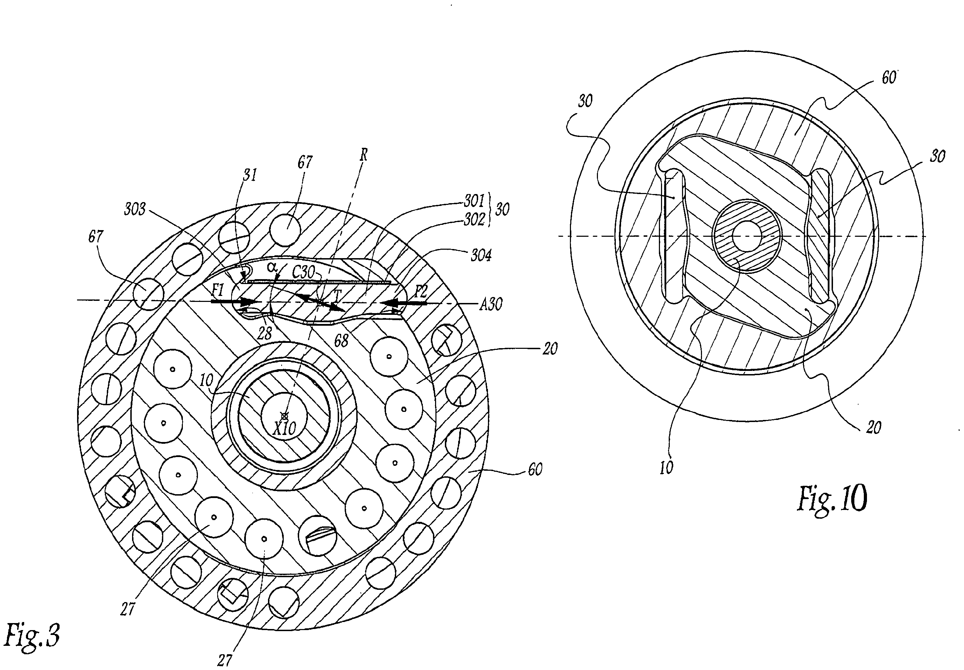

Comme visible à la figure 3, la direction radiale R du moyeu 2 passe par le centre C30 du capteur 30. L'axe longitudinal A30 du capteur 30 est légèrement incliné par rapport à une direction orthoradiale T du moyeu 2, passant par le centre C30 du capteur 30 et perpendiculaire à la direction radiale R.

L'axe longitudinal A30 forme un angle α avec la direction orthoradiale T. A la figure 3, l'angle α est situé dans le quadrant de gauche, par rapport à la direction radiale R. L'angle α est environ égal à 17°. De préférence, l'angle α est inférieur à 45°, de préférence encore inférieur à 20°.

Une entretoise 80 sépare axialement le flasque 60 d'un second flasque 70 qui porte la deuxième nappe de rayons 4b. Le second flasque 70 n'est pas directement solidaire en rotation avec le flasque 60. Comme expliqué plus précisément par la suite, les flasques 60 et 80 sont solidaires en rotation par l'intermédiaire des nappes de rayons 4a et 4b et de la jante 3. Un tube 90, enfilé autour de l'arbre 10, sépare axialement le corps de moyeu 20 d'un palier à billes 26 intercalé radialement entre l'arbre 10 et le flasque 70. Le flasque 70 est en appui axial contre un épaulement 92 du tube 90 et le palier à billes 26 est en appui axial contre un épaulement 72 du flasque 70. Un écrou 18 est intercalé axialement entre le flasque 70 et l'embout d'extrémité 19. On note J1, un jeu axial entre le flasque 70 et l'écrou 18. L'écrou 18 est vissé sur un filetage de l'arbre 10 et s'appuie sur le palier à billes 26 afin de régler le jeu axial des paliers à billes 24 et 26. Le flasque 70 est bloqué axialement par rapport au tube 90 mais est mobile en rotation par rapport au flasque 70. Un joint torique permet de créer des frottements entre l'arbre central 10 et l'écrou 18 afin qu'il ne se dérègle pas en utilisation.

Un dispositif électronique 100 est intercalé radialement entre le tube 90 et l'entretoise 80. Le dispositif électronique 100 est équipé d'une cellule 102 de type reed, pour la mesure de la vitesse angulaire du moyeu 2. La cellule reed 102 détecte chaque tour du moyeu 2, autour de l'arbre 10, au moyen d'un aimant 11 disposé dans une entaille ménagée dans l'arbre 10, ce qui permet d'obtenir une mesure de la vitesse angulaire de la roue 1.

De plus, le dispositif électronique 100 est pourvu d'une batterie non représentée de stockage d'énergie électrique qui alimente les jauges 310 à 313. Le signal de sortie des jauges 310 à 313 est transmis au dispositif électronique 100 par une liaison filaire, non représentée. Afin de limiter la consommation électrique, il est préférable d'alimenter les jauges 310 à 313 de manière pulsée en ne les alimentant que quelques dizaines de microsecondes à une fréquence d'échantillonnage supérieure à 40 Hz.

Lorsque le cyclise pédale, dans un mouvement moteur, les cliquets solidarisent en rotation le corps de roue-libre 40 avec le corps de moyeu 20, et le corps de moyeu 20 est entraîné en rotation autour de l'axe X10. Compte tenu du fait que le capteur 30 est intercalé radialement entre le corps de moyeu 20 et le flasque 60, le couple moteur fourni par le cycliste est transmis au flasque 60, par l'intermédiaire du capteur 30 qui est comprimé dans le logement 48, comme indiqué par les flèches F1 et F2 à la figure 3. Ainsi, le corps d'épreuve 301 du capteur 30 se déforme et fait varier la résistance des jauges de déformation 310 à 313, ce qui permet au dispositif électronique 100 de calculer la valeur du couple moteur, sur la base des signaux de sortie des jauges 310 à 313. En ce sens, le capteur 30 peut être qualifié de capteur de couple.

L'effort de compression encaissé par le capteur 30 est calculé à partir de la déformation du capteur 30. La composante de l'effort de compression utile pour l'entrainement en rotation du moyeu 2 est selon la direction orthoradiale T. Le couple moteur est égal à la distance qui sépare les jauges 310 à 313 de l'axe X10, multipliée par cette composante utile. Ainsi, dans l'idéal, l'axe longitudinal A30 est exactement aligné avec la direction orthoradiale T. Cependant, en pratique, l'axe longitudinal A30 est légèrement incliné, de l'angle α, par rapport à la direction T, pour permettre aux surfaces d'extrémité 33 et 35 du capteur 30 de prendre appui contre les surfaces d'appui 28 et 68.

Le capteur 30 travaille essentiellement en compression, ce qui permet d'utiliser un capteur 30 compact et léger qui peut mesurer des couples élevés. Ainsi, le moyeu 2 est relativement compact et léger et mesure efficacement le couple d'entrainement de la roue 1.

Le dispositif électronique 100 calcule la puissance motrice de la roue en multipliant la vitesse angulaire du moyeu 2 par la mesure du couple moteur fournie par les jauges 310 à 313. Le dispositif électronique 100 est équipé d'une antenne de transmission 103 qui transmet, par voie aérienne, un signal relatif à la mesure de la puissance, à un ordinateur de bord pouvant être fixé au guidon de la bicyclette. Par exemple, le signal est transmis par un signal Bluetooth ou par ondes radio. De préférence, l'entretoise 80 est fabriquée dans un matériau synthétique pour ne pas perturber le signal émis par le dispositif électronique 100.

En d'autres termes, en étant équipé de la cellule reed 102, le moyeu 2 constitue un système de mesure de la puissance d'entrainement de la roue 1.

Un jeu axial J2 sépare le corps de moyeu 20 et le flasque 60. Les rayons 4a ont tendance à tirer le flasque 60 vers l'autre flasque 70. Grâce au jeu J2, le flasque 70 n'est pas en appui axial contre le corps de moyeu 20, ce qui évite de générer un couple de frottement qui s'opposerait à l'effort du cycliste et générerait des incertitudes sur la mesure du couple. L'effort axial du flasque 60 transite par l'intermédiaire de l'entretoise 80 jusqu'au flasque 70.

Lorsque la roue 1 est soumise à un effort latéral, par exemple lorsque la trajectoire du cycle est courbe, cet effort transite depuis le pneu, passe par la jante 3 et par les nappes de rayons 4a et 4b jusqu'aux flasques 60 et 70, sur lesquels sont fixées les nappes des rayons 4a et 4b. Or, le flasque 70 est bloqué axialement bilatéralement, d'un coté par le palier à billes 26 et de l'autre par l'épaulement 92 du tube 90. L'absence de jeu de l'appui bilatéral est réglée par l'écrou 18 car le tube 90, le flasque 70 et le palier à billes 26 sont empilés en série le long de l'axe A10. Ainsi, il est relativement aisé d'annuler le jeu axial du flasque 70 lors du montage du moyeu 2 tout en gardant une liberté angulaire entre le flasque 70 et le corps de moyeu 20. Cette liberté angulaire est particulièrement utile lors de l'assemblage de la roue 1. En effet, au moment du rayonnage, la position angulaire relative du flasque 70 par rapport au flasque 60 est figée via les nappes de rayons 4a et 4b et la jante 3. Le sous ensemble ainsi constitué des deux flasques 60 et 70, de l'entretoise 80, des nappes de rayons 4a et 4b et de la jante 3 est libre en rotation. De plus, le capteur 30 n'est soumis à aucun effort de précontrainte. Par conséquent, en l'absence de couple transmis par la chaîne, le capteur 30 n'est pas sollicité. C'est seulement lorsqu'un couple moteur est transmis que le capteur 30 est sollicité en compression.

De manière avantageuse, lorsque la roue 1 est en roue libre, on règle l'offset du capteur 30 à zéro pour annuler le déséquilibrage du pont de Wheatstone dû aux écarts de résistance de ses jauges 310 à 313 et pour annuler également les déséquilibres de toute la chaîne d'amplification et de traitement du signal.

Le dispositif électronique 100 détecte automatiquement les phases de roue libre en étudiant les variations instantanées du couple. En effet, au cours d'un cycle de pédalage, le couple transmis par le cycliste passe par deux maximums, correspondant aux positions où les manivelles droite et gauche font un angle de 60° avec la verticale, et deux minimums, lorsque les manivelles sont en position basse. La mesure du couple fournie par le capteur 30 détecte ces modulations. Lorsqu'il n'y a plus de modulation, le dispositif électronique 100 déduit que le cycle est en roue libre. Il peut alors procéder à l'offset.

La géométrie du capteur 30 est visible plus en détail aux figures 4 à 8. Le capteur 30 est symétrique par rapport à un plan médian longitudinal P30, qui passe par l'axe A30 et qui est perpendiculaire à la face supérieure 31.

Le corps d'épreuve 301 comprend deux faces latérales opposées, de petites dimensions, constituées par les surfaces d'extrémité 33 et 35, et deux faces latérales 34 et 36 opposées, de grandes dimensions.

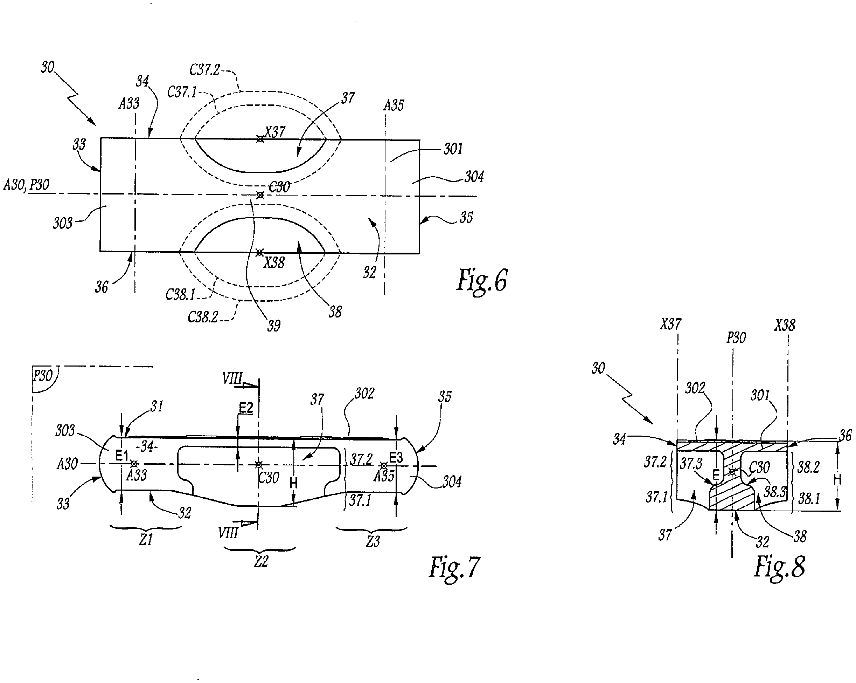

Comme bien visible à la figure 7, la face inférieure 32 n'est pas plane et la hauteur totale du corps d'épreuve 301, mesurée perpendiculairement à la face supérieure 31, varie le long de l'axe A30. La hauteur H est minimale dans deux zones Z1 et Z3 situées respectivement à proximité des extrémités axiales 301 et 303, puis augmente progressivement en se rapprochant d'une zone centrale Z2 du corps d'épreuve 301, située axialement entre les zones Z1 et Z3.

Les surfaces d'extrémité 33 et 35 sont convexes et leur section transversale, considérée parallèlement au plan P30, est constante. Ainsi, les surfaces 33 et 34 ont la géométrie d'une portion de cylindre. On note respectivement A33 et A35, les axes de ces cylindres. Les axes A33 et A35 sont perpendiculaires au plan P30. Le centre C30 est situé à mi-distance entre les axes A33 et A35, le long de l'axe A30.

Deux échancrures 37 et 38 sont creusées dans le corps d'épreuve 301. Les échancrures 37 et 38 sont situées de part et d'autre du plan P30 et sont symétriques, l'une par rapport à l'autre, par rapport au plan P30. Les échancrures 37 et 38 sont séparées l'une de l'autre par une nervure centrale longitudinale 39, centrée sur le plan P30. La nervure 39 relie la face supérieure 31 et la face inférieure 32.

L'échancrure 37 débouche à la fois sur la face latérale 34 et sur la face inférieure 32, et l'échancrure 38 débouche à la fois sur la face latérale 36 et sur la face inférieure 32.

Les échancrures 37 et 38 comprennent chacune une partie basse 37.1 ou 38.1, qui débouche sur la face inférieure 32, et une partie haute 37.2 ou 38.2, située du côté de la face supérieure 31 et dont la hauteur, mesurée perpendiculairement au plan P30, est plus importante que celle des parties basses 37.1 et 38.1. Les parties hautes 37.2 et 38.2 sont plus longues et plus larges que les parties basses 37.1 et 38.1, de sorte qu'un épaulement 37.3 ou 38.3, parallèle à la face supérieure 31, sépare chaque partie haute 37.2 et 38.2 de la partie basse 37.1 ou 38.1 correspondante.

La partie basse 37.1 et 38.1 de chaque échancrure 37 et 38 a la forme d'un demi-cylindre dont la base, considérée dans sa totalité, est un contour C37.1 ou C38.1 de forme oblongue, représenté en pointillés à la figure 6, dont l'axe longitudinal est parallèle à l'axe A30 et coïncide, respectivement, avec la face latérale 34 et 36. Les axes longitudinaux X37 et X38 des cylindres sont perpendiculaires à la face supérieure 31.

De manière similaire, la partie haute 37.2 et 38.2 de chaque échancrure 37 et 38 a la forme d'un demi-cylindre, d'axe longitudinal X37 ou X38, dont la base, considérée dans sa totalité, est un contour C37.2 ou C38.2 de forme oblongue, représenté en pointillés à la figure 6, dont l'axe longitudinal est parallèle à l'axe A30 et coïncide, respectivement, avec la face latérale 34 et 36.

La géométrie du corps d'épreuve 301 est spécialement conçue pour améliorer les performances du capteur 30. Lorsque le capteur 30 est compressé longitudinalement, la résistance des jauges 311 et 313, qui sont localisées respectivement à proximité de l'extrémité axiale 303 et de l'extrémité axiale 304, varie de manière très faible, car l'épaisseur E1 et E3 du corps d'épreuve 301, à proximité des faces latérales 33 et 35, est maximale. Au contraire, la résistance des jauges 310 et 312, qui sont localisées au dessus des échancrures 37 et 38, varie de manière significative, car l'épaisseur E2 du corps d'épreuve 301, dans la zone centrale Z2, et au niveau des échancrures 37 et 38, est minimale. Le montage en pont de Wheatstone permet de tirer profit de ces différences de variation de résistance, pour obtenir un signal, en sortie du pont de Wheatstone, de forte amplitude.

D'autre part, lorsque le capteur 30 est compressé longitudinalement, il se produit une rotation infinitésimale relative du flasque 60 par rapport au corps de moyeu 20. Du fait de cette rotation et des frottements sur les surfaces d'extrémité 33 et 35 du capteur, un moment de flexion est généré. Le corps d'épreuve 301 se déforme donc en flexion selon une direction normale à la face supérieure 31 et qui est dans le plan P30, comme indiqué par les flèches F3 et F4 à la figure 4. Le moment de flexion traversant le corps d'épreuve 301 est normal au plan P30. La déformation en flexion est minimisée grâce à la géométrie du corps d'épreuve 301, notamment la présence de la nervure centrale 39, qui contribue à accroitre la rigidité du corps d'épreuve 301.

La géométrie particulière précédemment décrite du corps d'épreuve, associée au positionnement des quatre jauges 310, 311, 312, 313, permet d'avoir un signal en sortie du pont complètement indépendant de la flexion mais uniquement dépendant de la compression.

La figure 11 décrit une vue en perspective d'une variante simplifiée du capteur 30. Le contour général extérieur est le même que le capteur décrit aux figures 4 à 8, mais les échancrures 37, 38 sont remplacées par un unique trou 49 dont la forme est étudiée pour que le signal en sortie du pont soit indépendant de la flexion mais dépende uniquement de la compression.

Par ailleurs, lorsque le capteur 30 est compressé longitudinalement, la forme convexe des surfaces d'extrémité 33 et 35, ainsi que la forme concave complémentaire des surfaces d'appui 28 et 68, permet d'éviter le matage des faces 33 et 35 contre les surfaces d'appui 28 et 68.

La forme convexe des surfaces d'extrémité 33 et 35 est complémentaire de la forme concave des surfaces d'appui 28 et 68. Ainsi, lorsque le capteur 30 est en place dans le logement 48, le capteur 30 est mobile en rotation, autour des axes A33 et A35, par rapport au flasque 60 et au corps de moyeu 20.

Dans un autre mode de réalisation, le capteur 30 est placé dans un logement orthoradial (perpendiculaire à une direction radiale).

Dans un autre mode de réalisation, deux capteurs 30 sont intercalés entre le corps de moyeu et le flasque. Ces capteurs sont diamétralement opposés l'un par rapport à l'autre.

La figure 10 représente une vue en coupe d'un mode de réalisation alternatif de l'invention. Il s'agit d'une coupe similaire à celle de la figure 3. Deux capteurs, diamétralement opposés sont placés chacun dans un logement ménagé pour une partie dans le corps de moyeu 20, et pour l'autre partie dans le flasque 60. La présence des deux capteurs permet de mieux équilibrer le faible mouvement du flasque par rapport au corps de moyeu. Les formes respectives du flasque (forme interne) et du corps de moyeu (forme externe) sont telles que les logements placent les capteurs selon une direction orthoradiale. En d'autres termes, l'angle α est égal à 0° ou sensiblement égal à cette valeur.

Dans le mode de réalisation décrit à la figure 10, on pourra choisir d'instrumenter les deux capteurs ou de n'en n'instrumenter qu'un seul.

Dans un autre mode de réalisation, non représenté, le capteur 30 est placé dans un logement radial, travaille principalement en cisaillement et se déforme principalement en flexion.

En variante, le capteur 30 est équipé d'un nombre de jauges de déformation différent de quatre.

Dans une autre variante, le dispositif électronique 100 est relié par une liaison filaire à l'ordinateur de bord, via un collecteur tournant.

En variante non représentée, l'entretoise 80 se présente sous la forme d'une cage comportant des branches longitudinales séparées par des évidements longitudinaux. Une telle entretoise est relativement souple en torsion.

Dans un autre mode de réalisation, non représenté, le flasque 70 est solidaire en rotation avec le corps de moyeu 20. Dans ce cas, il est plus délicat de minimiser, lors du montage, la précontrainte ou le jeu du capteur 30. Si la précontrainte est trop importante, par exemple supérieure à 1 N.m, la mesure et l'offset seront peu précis, notamment à cause de l'hystérèse dû aux frottements. Si, à l'inverse, le capteur 30 est monté dans le logement 48 avec du jeu, alors les petits couples ne pourront être détectés et il y aura une erreur sur l'offset. Cependant, dans ce mode de réalisation, on peut régler la précontrainte par le rayonnage, en ajustant l'équilibre entre la tension des rayons tracteurs et celle des rayons non-tracteurs.

En variante, les jauges de déformation 310 à 313 sont montées en demi pont de Wheatstone.

Dans un autre mode de réalisation, non représenté, le moyeu 2 n'est pas équipé de l'organe de mesure 102 de la vitesse angulaire du moyeu 2. Dans ce cas, le moyeu ne constitue pas un système de mesure de puissance mais seulement un moyeu de mesure de couple. Toutefois, avec un tel moyeu de mesure de couple, il est possible d'obtenir une mesure de la puissance d'entrainement de la roue en déterminant sa vitesse angulaire par des moyens appropriés qui, par exemple, sont placés sur une autre roue du cycle. Dans ce cas, il est envisageable d'équiper le cycle d'un module de calcul, par exemple intégré à l'ordinateur de bord, pour le calcul de la puissance à partir de la mesure du couple, fournie par le moyeu 2, et de la mesure de la vitesse angulaire.

En outre, les différents modes de réalisation et variantes décrits ci-dessus peuvent être combinés entre eux, partiellement ou totalement, pour donner lieu à d'autres modes de réalisation de l'invention.

## Revendications

1. Moyeu (2) de mesure du couple d'entrainement d'une roue (1) de cycle, comprenant :
- un arbre central (10) définissant un axe de rotation (X10) de la roue,
- un corps de moyeu (20) monté libre en rotation autour de l'arbre (10),
- un flasque (60) monté libre en rotation autour du corps de moyeu (20) et aligné axialement avec le corps de moyeu (20),
- un capteur de couple (30) comprenant un corps d'épreuve (301) qui supporte au moins une jauge de déformation (310-313),
le moyeu (2) étant **caractérisé en ce que** le capteur de couple (30) est logé dans un logement (48) bi-partite qui comprend une découpe (48.1), ménagée dans une surface radiale externe (203) du corps de moyeu (20), et une échancrure (48.2), ménagée dans une surface radiale externe (62) du flasque (60).

2. Moyeu (2) selon la revendication 1, **caractérisé en ce qu'**un axe longitudinal (A30) du capteur (30) forme avec une direction orthoradiale (T) à l'axe de rotation du moyeu (2), qui passe par le centre du capteur (30), un angle (α) inférieur à **45°**, de préférence inférieur à **20**°.

3. Moyeu (2) selon l'une des revendications précédentes, **caractérisé en ce que** lorsque le cycliste pédale, le capteur (30) est comprimé (F1, F2) entre une surface d'appui (28) de la découpe (48.1) du corps de moyeu (20) et une surface d'appui (68) de l'échancrure (48.2) du flasque (60), en regard avec la surface d'appui (28) du corps de moyeu (20).

4. Moyeu (2) selon la revendication 3, **caractérisé en ce que** les surfaces d'appui (28, 68) sont concaves et **en ce que** le corps d'épreuve (301) comprend deux faces d'appui (33, 35) opposées convexes, en contact contre les surfaces d'appui (28, 68).

5. Moyeu (2) selon l'une des revendications précédentes, **caractérisé en ce que** les jauges de déformation (310-313) sont rapportées sur une même face supérieure (31) du corps d'épreuve (301).

6. Moyeu (2) selon la revendication 5, **caractérisé en ce que** le corps d'épreuve (301) supporte quatre jauges de déformation (310-313) montées en pont de Wheatstone, **en ce qu'**une épaisseur (E) du corps d'épreuve (301), mesurée perpendiculairement à la face supérieure (31), varie entre une épaisseur minimale (E2) et une épaisseur maximale (E1, E3), **en ce que** deux des jauges de déformation (310, 312) sont localisées au niveau d'une zone (Z2) du corps d'épreuve (301) dont l'épaisseur (E2) est plus faible que l'épaisseur (E1, E3) de zones (Z1, Z3) du corps d'épreuve (301) au niveau desquelles sont localisées les deux autres jauges de déformation (311, 313).

7. Moyeu (2) selon l'une des revendications précédentes, **caractérisé en ce que** le corps d'épreuve (301) comprend deux échancrures (37, 38) situées de part et d'autre d'un plan médian longitudinal (P30) du corps d'épreuve (301), et **en ce que** la forme de chaque échancrure (37, 38) est définie par un demi-cylindre dont la base complète est un contour (C37.1, C37.2, C38.1, C38.2) de forme oblongue.

8. Moyeu (2) selon les revendications 5 et 7, **caractérisé en ce que** chaque échancrure (37, 38) comprend d'une part, une partie inférieure (37.1, 38.1), qui débouche sur une face (32) opposée à la face supérieure (31) et, d'autre part, une partie supérieure (37.2, 38.2), située du côté de la face supérieure (31), et **en ce que** les dimensions de la partie supérieure (37.2, 38.2) sont plus grandes que les dimensions de la partie inférieure (37.1, 38.1).

9. Moyeu (2) selon l'une des revendications précédentes, **caractérisé en ce que** le corps d'épreuve (301) comprend une nervure (39) centrée sur un plan médian longitudinal (P30) du corps d'épreuve (301).

10. Système de mesure de la puissance d'entrainement d'une roue de cycle, **caractérisé en ce qu'**il comprend un moyeu (2) de mesure de couple selon l'une des revendications 1 à 9 équipé d'un organe (102) de mesure de la vitesse angulaire du moyeu (2) par rapport à l'arbre central (10).

11. Moyeu de mesure de puissance selon la revendication 11, **caractérisé en ce qu'**il comprend un dispositif électronique (100) relié au capteur de couple (30) et à l'organe de mesure (102), pour le calcul de la puissance de la roue (1) à partir des informations transmises par le capteur de couple (30) et l'organe de mesure (102).

12. Roue (1) de cycle, **caractérisée en ce qu**'elle comprend un moyeu (2) selon l'une des revendications 1 à 9 ou un système selon l'une des revendications 10 ou 11.
